# EUROPÄISCHE PATENTSCHRIFT

(11) **EP 1 487 946 B1**
(45) Veröffentlichungstag und Bekanntmachung des Hinweises auf die Patenterteilung: **23.11.2005**
(21) Anmeldenummer: 03709722.7
(22) Anmeldetag: 26.02.2003
(51) Int. Cl.: C10M 171/00, C10M 107/34, C08G 65/26

(54) **THERMISCH STABILE POLYALKYLENGLYKOLE ALS SCHMIERMITTEL F R K LTEMASCHINEN**
THERMALLY STABLE POLYALKYLENE GLYCOLS AS LUBRICANTS FOR REFRIGERATORS
POLYALKYLENEGLYCOLS THERMIQUEMENT STABLES UTILISES COMME LUBRIFIANTS POUR MACHINES FRIGORIFIQUES

(30) Priorität: 07.03.2002 DE 10209987
(43) Veröffentlichungstag der Anmeldung: 22.12.2004
(73) Patentinhaber: Clariant GmbH, 65929 Frankfurt am Main (DE)
(72) Erfinder: PÖLLMANN, Klaus, 84489 Burghausen (DE); STRASSER, Anton, 84503 Altötting (DE); PFÜLLER, Oliver, 65843 Sulzbach (DE); KAPFINGER, Joseph, 84236 Falkenberg (DE)
(74) Vertreter: Mikulecky, Klaus
(86) Internationale Anmeldenummer: PCT/EP2003/001928
(87) Internationale Veröffentlichungsnummer: WO 2003/074641

(56) Entgegenhaltungen:
- EP-A- 0 378 176
- EP-A- 0 536 940
- EP-A- 1 028 156
- EP-A- 1 199 348
- WO-A-98/50499
- US-A- 6 028 037

## Beschreibung

Die vorliegende Erfindung betrifft die Verwendung von thermisch stabilen Polyalkylenglykolgrundölen für Schmiermittel für Kältemaschinen, die Kohlendioxid als Kältemittel verwenden.

Polyalkylenglykole, also Copolymere aus Ethylenoxid und Propylenoxid, werden aufgrund ihrer hohen Viskositätsindizes, geringen Druck-Viskositäts-Abhängigkeiten und niedrigen Pourpoints seit vielen Jahren als Basisöle für verschiedenste Schmiermittelanwendungen eingesetzt (J. Fahl, KI Luft und Kältetechnik 8, 2000, Seite 356-360). Im Allgemeinen kommen dabei Formulierungen zum Einsatz, die Polyalkylenglykole als überwiegenden Bestandteil enthalten. Daneben enthalten die Formulierungen zur Optimierung der Eigenschaften eine Vielzahl von Additiven, wie zum Beispiel Antioxidantien, Verschleißschutzadditive, EP-Additive und Alterungsschutzadditive.

Im Bereich der Kraftfahrzeugklimaanlagen werden für Anlagen, die mit dem Kältemittel R134A betrieben werden, zur Kompressorenschmierung beispielsweise endständig mit Alkylgruppen veretherte Polyalkylenglykole (statistische Etylenoxid-/Propylenoxid-Copolymere) verwendet. Aufgrund ihrer chemischen Struktur besitzen diese Schmierstoffe hervorragende Schmier- und Viskositätseigenschaften (J.Fahl, E. Weidner, KI Luft und Kältetechnik 10, 2000 Seite 478-481).

Die Synthese dieser Polyalkylenglykole, erfolgt im allgemeinen durch anionisch oder kationisch katalysierte, ringöffnende Copolymerisation von Ethylenoxid, Propylenoxid und ggf. höheren aliphatischen Epoxiden, ausgehend von einem Initiator- oder Startmolekül mit aktiven/aciden Wasserstoffatomen. Zur Modifizierung der Eigenschaften schließt sich an die Polymerisation gegebenenfalls noch eine Veretherung der resultierenden freien Hydroxygruppen mit Alkylresten an.

Aus ökologischen Erwägungen heraus wird derzeit versucht, Kältekompressoren mit Kohlendioxid als Kälteträger zu entwickeln. Bedingt durch die im Vergleich zu R134A auftretenden höheren Drücke und Temperaturbelastungen im System bei Verwendung von CO₂ sowohl im über- als auch im unterkritischen Bereich, werden dort auch höhere Anforderungen an die thermische Belastbarkeit der Schmiermittel gestellt.

Die bisher vor allem für R134A Systeme als Schmiermittel verwendeten Polyalkylenglykol-Typen zeigen einen Pourpoint von unter -35°C, das heißt sie verlieren ihre Fließfähigkeit erst bei sehr tiefen Temperaturen. Darüber hinaus ist ihre Viskosität wesentlich weniger temperaturabhängig wie bei auf Mineralöl basierenden Schmiermitteln. Sie sind also in einem weiten Temperaturbereich einsetzbar. Ihre thermische Stabilität ist jedoch für viele Anwendungen nicht ausreichend. Insbesondere sind sie den thermischen Belastungen, die in Kälteanlagen, die mit CO₂ betrieben werden, vorherrschen, nicht ausreichend gewachsen, wie in WO-A-99/13032 offenbart. Dieses Dokument offenbart Polyalkylenglykole, die von Hydrochinon als Initiator ausgehen. Solche Verbindungen sind jedoch wegen ihrer Kristallisationsneigung als Schmiermittel in Kältemaschinen wenig geeignet.

Aromatische Polyether, wie z.B. Polyphenylether zeigen hervorragende thermische Stabilitäten, haben jedoch für die Anwendung als Schmiermittel bei tiefen Temperaturen unzureichende Pourpoints bis zu -20°C und eine zu starke Viskositäts-Temperaturabhängigkeit. (F. Wunsch in "Einsatz synthetischer Schmierstoffe und Arbeitsflüssigkeiten in der Industrie", Techn. Akademie Esslingen, 1998).

In EP-A-0 311 881 und US-4 360 144 wird die Anwendung von Ethylenoxid-Propylenoxid-Polymeren mit aromatischen Startmolekülen R und freien Endhydroxygruppen als Flussmittel zur Herstellung von Leiterplatten mit erhöhter thermischer Stabilität beschrieben. Die Anwendung dieser Verbindungsklasse als thermisch stabile Schmiermittelbasisöle wird jedoch nicht offenbart. Darüber hinaus ist für die Anwendung dieser Verbindungen als Flussmittel das Vorhandensein von freien Hydroxygruppen entscheidend. Ein tiefer Pourpoint und eine flache Viskositäts-Temperatur-Charakteristik sind dagegen unerheblich.

Aufgabe der Erfindung war es somit, thermisch stabile Basisöle für die Anwendung und Formulierung von Kältekompressorenölen, insbesondere für die Verwendung zusammen mit CO₂ als Kältemedium zu entwickeln.

Ein erfindungsgemäßes Kältekompressorenöl sollte einen Pourpoint, gemessen nach DIN 51597/ISO 2909, von unter -25°C und eine thermische Stabilität aufweisen, die einen Einsatz bei Temperaturen von über 220°C ermöglicht. Darüber hinaus sollte eine möglichst geringe Viskositäts-Temperaturabhängigkeit bestehen, also die Viskosität als Funktion der Temperatur eine möglichst geringe Steigung aufweisen. Vordringliche Aufgabe war jedoch die Verbesserung der thermischen Stabilität im Vergleich zu konventionellen Polyalkylenglykolölen, die bei dieser Verbindungsklasse durch den Gewichtsverlust in Folge thermisch oxidativer Zersetzung mittel Thermogravimetrie bestimmt werden kann. Ein weiteres Indiz für die Erhöhung der thermischen Stabilität ist die Erhöhung des Flammpunkts.

Überraschenderweise wurde gefunden, dass durch die Verwendung von Alkylenoxidaddukten an Resorcin oder Pyrogallol als Schmiermittel für Kältemaschinen diese Aufgabe gelöst werden kann.

Gegenstand der Erfindung ist somit die Verwendung von Verbindungen der Formel 1 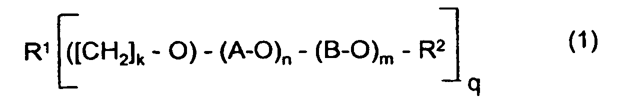 worin
- R¹: ein von Resorcin (1,3-Dihydroxabenzol) oder Pyrogallol (1,2,3-Trihydroxybenzol) abgeleiteter Rest
- R²: Wasserstoff, C₁- bis C₁₈-Alkyl oder C₆- bis C₁₈-Aryl
- A: ein Ethylenrest
- B: ein iso-Propylenrest
- k: null, 1 oder 2
- (n+m): eine Zahl von 3 bis 20, wobei n mindestens gleich 1 ist, und
- q: 2 oder 3 bedeuten,
und worin, wenn m und n beide größer als null sind, die Abfolge der Ethylen- und Propyleneinheiten statistisch ist,
als Basisöl zur Formulierung von Schmiermitteln für Kältemaschinen, die Kohlendioxid als Kältemittel enthalten.

Ein weiterer Gegenstand der Erfindung ist ein Verfahren zum Betrieb von Kältemaschinen, wobei eine Verbindung der Formel 1 als Schmiermittel benutzt wird.

R¹ leitet sich von Resorcin (1,3-Dihydroxybenzol) oder Pyrogallol (1,2,3-Trihydroxybenzol) ab.

Der Rest R¹ entsteht aus den vorstehend offenbarten Verbindungen durch formale Abstraktion der OH-Gruppen.

In einer weiteren bevorzugten Ausführungsform mit besonders niedrigem Pour Point beträgt die Summe (m+n) 2 bis 9, insbesondere 3 bis 5. Es wurde gefunden, dass eine besonders hohe thermische Stabilität mit reinen Ethylenoxidaddukten erreicht wird, d.h. wenn m gleich null ist.

In einer weiteren bevorzugten Ausführungsform steht R² für einen Alkylrest mit 1 bis 12, insbesondere 2 bis 6 C-Atomen, speziell 2 bis 4 C-Atomen.

Die erfindungsgemäßen Verbindungen sind durch Alkoxylierung und gegebenenfalls anschließende Veretherung von Resorcin oder Pyrogallol herstellbar. Die Synthese der erfindungsgemäßen Verbindungen erfolgt als anionisch initiierte ringöffnende Polymerisation in bekannter Weise. Dazu werden zunächst aus den Hydroxygruppen der aromatischen Initiatormoleküle, die mindestens 2 aktive H-Atome aufweisen, mit Base die entsprechenden Anionen gebildet und danach die erforderliche stöchiometrische Menge eines Alkylenoxids oder eines Alkylenoxidgemisches zudosiert.

Um die bevorzugten endveretherten Produkte herzustellen, bei denen R² nicht Wasserstoff ist, muss nach Abreaktion des Alkylenoxids zu den hydroxyfunktionellen aromatisch initiierten Alkylenoxidaddukten zusätzlich das entsprechende Alkylierungsagens (z.B. Alkylhalogenid oder Alkylsulfat) in der stöchiometrisch erforderlichen Menge zudosiert werden. Das endalkylierte Alkylenoxidaddukt kann nach Waschen mit Wasser zur Entfernung des im letzten Reaktionsschritt entstehenden Salzes isoliert werden.

### Beispiele

### Beispiel 1

Es wurden 110 g Resorcin in einem Druckreaktor mit 80 g NaOH bei 120°C zum entsprechenden Diphenolatanion umgesetzt und das entstehende Reaktionswasser unter Vakuum abdestilliert. Anschließend wurde das Diphenolatanion durch langsame Zugabe von 352 g Ethylenoxid im Zeitraum von 6 Stunden zum entsprechenden Resorcinpolyethoxylat umgesetzt. Das Produkt wurde mit Phosphorsäure auf pH 6-7 eingestellt und filtriert.

Das Produkt zeigte einen Pourpoint von -44°C. Die Untersuchung der thermischen Stabilität mittels Thermogravimetrie ergab 8 % Gewichtsverlust nach 20 Minuten bei 250°C und 30 % Gewichtsverlust nach 100 Minuten bei 250°C. Die Auftragung der Viskosität gegen die Temperatur im Bereich 0 bis 100°C ergab eine Steigung von 47,8. Der Flammpunkt lag bei 315°C.

### Beispiel 2

Das Produkt aus Beispiel 1 wurde, ohne die Neutralisation mit Phosphorsäure durchzuführen, nach nochmaliger Zugabe von 80 g Natriumhydroxid mit 208 g Methylchlorid für 6 Stunden bei 120°C unter Druck umgesetzt. Nach Abziehen des überschüssigen Methylchlorids wurde das Produkt mit Wasser gewaschen, neutralisiert und filtriert.

Das Produkt zeigte einen Pourpoint von -44°C. Die Untersuchung der thermischen Stabilität mittels Thermogravimetrie ergab 10 % Gewichtsverlust nach 20 Minuten bei 250°C und 45 % Gewichtsverlust nach 100 Minuten bei 250°C. Die Auftragung der Viskosität gegen die Temperatur im Bereich 0 bis 100°C ergab eine Steigung von 2,69. Der Flammpunkt lag bei 300°C.

### Beispiel 3

Es wurden 124 g Pyrogallol in einem Druckreaktor mit 120 g NaOH bei 140°C zum entsprechenden Triphenolatanion umgesetzt und das entstehende Reaktionswasser unter Vakuum abdestilliert. Anschließend wurde das Triphenolatanion durch langsame Zugabe von 616 g Ethylenoxid im Zeitraum von 6 Stunden zum entsprechenden Pyrogallolpolyethoxylat umgesetzt. Das Produkt wurde mit Phosphorsäure auf pH 6-7 eingestellt und filtriert.

Das Produkt zeigte einen Pourpoint von -26°C. Die Untersuchung der thermischen Stabilität mittels Thermogravimetrie ergab 2 % Gewichtsverlust nach 20 Minuten bei 250°C und 6 % Gewichtsverlust nach 100 Minuten. Die Auftragung der Viskosität gegen die Temperatur im Bereich 0 bis 100°C ergab eine Steigung von 8. Der Flammpunkt lag bei 315°C.

### Beispiel 4

Es wurden 110 g Resorcin in einem Druckreaktor mit 80 g NaOH bei 120°C zum entsprechenden Diphenolatanion umgesetzt, und das entstehende Reaktionswasser unter Vakuum abdestilliert. Anschließend wurde das Diphenolatanion durch langsame Zugabe eines Gemischs von 308 g Ethylenoxid und 406 g Propylenoxid im Zeitraum von 6 Stunden zum entsprechenden Resorcinpolyalkoxylat umgesetzt. Das Produkt wurde mit Phosphorsäure auf pH 6-7 eingestellt und filtriert.

Das Produkt zeigte einen Pourpoint von -28°C. Die Untersuchung der thermischen Stabilität mittels Thermogravimetrie ergab 10 % Gewichtsverlust nach 30 Minuten bei 250°C und 23 % Gewichtsverlust nach 100 Minuten. Die Auftragung der Viskosität gegen die Temperatur im Bereich 0 bis 100°C ergab eine Steigung von 31. Der Flammpunkt lag bei 310°C.

### Vergleichsbeispiel 1:

Es wurden 106 g Propylenglykol in einem Druckreaktor mit 80 g NaOH bei 120°C zum entsprechenden Dialkoholatanion umgesetzt und das entstehende Reaktionswasser unter Vakuum abdestilliert. Anschließend wurde das Dialkoholatanion durch langsame Zugabe von 352 g Ethylenoxid im Zeitraum von 6 Stunden zum entsprechenden Ethoxylat umgesetzt. Das Produkt wurde mit Phosphorsäure auf pH 6-7 eingestellt und filtriert.

Das Produkt zeigte einen Pourpoint von -25°C. Die Untersuchung der thermischen Stabilität mittels Thermogravimetrie ergab bereits 90 % Gewichtsverlust nach 30 Minuten bei 250°C und 98 % Gewichtsverlust nach
100 Minuten bei 250°C. Die Auftragung der Viskosität gegen die Temperatur im Bereich 0 bis 100°C ergab eine Steigung von 3,4. Der Flammpunkt lag bei 245°C.

### Vergleichsbeispiel 2:

Es wurden 118 g Butylglykol in einem Druckreaktor mit 40 g NaOH bei 120°C zum entsprechenden Alkoholatanion umgesetzt und das entstehende Reaktionswasser unter Vakuum abdestilliert. Anschließend wurde das Alkoholatanion durch langsame Zugabe eines Gemischs von 308 g Ethylenoxid und 406 g Propylenoxid im Zeitraum von 6 Stunden zum entsprechenden Butylpolyalkoxylat umgesetzt. Das Produkt wurde mit Phosphorsäure auf pH 6-7 eingestellt und filtriert.

Das Produkt zeigte einen Pourpoint von -50°C. Die Untersuchung der thermischen Stabilität mittels Thermogravimetrie ergab 90 % Gewichtsverlust nach 25 Minuten bei 250°C und 98 % Gewichtsverlust nach 100 Minuten bei 250°C. Die Auftragung der Viskosität gegen die Temperatur im Bereich 0 bis 100°C ergab eine Steigung von 1. Der Flammpunkt lag bei 245°C.

**Tabelle 1:**

| Ergebnisse | | | | | | | | |
|---|---|---|---|---|---|---|---|---|
| Nr. | Starter | EO/mol | PO/mol | PP, °C | Gewichtsverlust | | η(T) | Fla.Pt. |
| | | | | | 20 min | 100 min | | |
| 1 | Resorcin | 8 | 0 | -44 | 8 % | 30 % | 47,8 | 315 |
| 2 | Resorcin | 8 | 0 | -44 | 10 % | 45 % | 2,69 | 300 |
| 3 | Pyrogallol | 14 | 0 | -26 | 2 % | 6 % | 8 | 315 |
| 4 | Resorcin | 7 | 7 | -28 | 10 % | 23 % | 31 | 310 |
| V1 | PG | 8 | 0 | -25 | 90 % | 98 % | 3,4 | 245 |
| V2 | BuG | 7 | 7 | -50 | 90 % | 98 % | 1 | 245 |

## Patentansprüche

1. Verwendung von Verbindungen der Formel 1 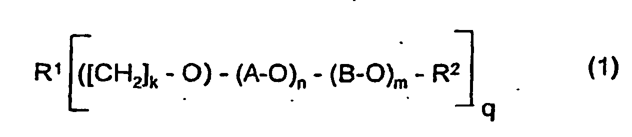 worin
R¹ ein von Resorcin (1,3-Dihydroxybenzol) oder Pyrogallol (1,2,3-Trihydroxybenzol) abgeleiteter Rest
R² Wasserstoff, C₁- bis C₁₈-Alkyl oder C₆- bis C₁₈-Aryl
A ein Ethylenrest
B ein iso-Propylenrest
k null, 1 oder 2
(n+m) eine Zahl von 3 bis 20, wobei n mindestens gleich 1 ist, und
q 2 oder 3 bedeuten,
und worin, wenn m und n beide größer als null sind, die Abfolge der Ethylen- und Propyleneinheiten statistisch ist,
als Basisöl-zur Formulierung von Schmiermitteln für Kältemaschinen, die Kohlendioxid als Kältemittel enthalten.

2. Verwendung gemäß Anspruch 1, worin die Summe (m+n) 3 bis 9 beträgt.

3. Verwendung gemäß Anspruch 1 und/oder 2, worin R² für einen Alkylrest mit 1 bis 12 C-Atomen steht.

4. Verwendung gemäß einem oder mehreren der Ansprüche 1 bis 3, worin m gleich null ist.

5. Verwendung gemäß einem oder mehreren der Ansprüche 1 bis 4, worin k gleich null ist.

6. Verwendung gemäß einem oder mehreren der Ansprüche 1 bis 5, worin R² für eine C₁- bis C₁₈-Alkyl oder C₆- bis C₁₈-Arylgruppe steht.

7. Verfahren zum Betrieb einer Kältemaschine mit Kohlendioxid als Kältemedium, indem eine Verbindung wie in einem oder mehreren der Ansprüche 1 bis 6 definiert als Basisöl für Schmiermittel eingesetzt wird.

## Claims

1. The use of compounds of the formula 1 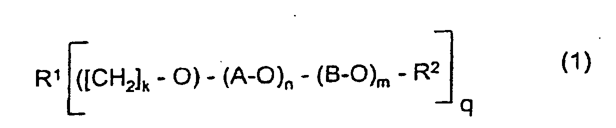 where
R¹ is a radical derived from resorcinol (1,3-dihydroxybenzene) or pyrogallol (1,2,3-trihydroxybenzene),
R² is hydrogen, C₁- to C₁₈-alkyl or C₆- to C₁₈-aryl
A is an ethylene radical
B is an isopropylene radical
k is zero, 1 or 2
(n+m) is a number from 3 to 20, where n is at least 1, and
q is 2 or 3,
and where, when m and n are both greater than zero, the sequence of ethylene and propylene units is random
as a base oil for formulating lubricants for refrigerating machines which contain carbon dioxide as the refrigerant.

2. The use as claimed in claim 1, wherein the sum (m+n) is from 3 to 9.

3. The use as claimed in claim 1 and/or 2, wherein R² is an alkyl radical having from 1 to 12 carbon atoms.

4. The use as claimed in one or more of claims 1 to 3, wherein m is zero.

5. The use as claimed in one or more of claims 1 to 4, wherein k is zero.

6. The use as claimed in one or more of claims 1 to 5, wherein R² is a C₁- to C₁₈-alkyl or C₆- to C₁₈-aryl group.

7. A method for operating a refrigerating machine using carbon dioxide as a refrigerating medium, by using a compound as defined in one or more of claims 1 to 6 as a base oil for lubricants.

## Revendications

1. Utilisation de composés de formule 1 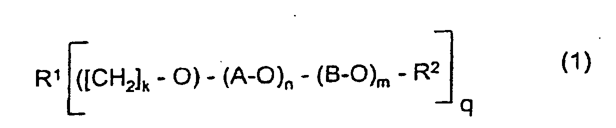 dans laquelle
R¹ représente un groupe dérivé du résorcinol (1,3-dihydroxybenzène) ou du pyrogallol (1,2,3-trihydroxybenzène)
R² représente un atome d'hydrogène, un groupe alkyle en C₁ à C₁₈ ou aryle en C₆ à C₁₈
A représente un groupe éthylène
B représente un groupe isopropylène
k vaut 0, 1 ou 2
(n+m) représente un nombre de 3 à 20, n étant au moins égal à 1, et
q vaut 2 ou 3,
et dans laquelle, lorsque m et n sont tous les deux supérieurs à zéro, la séquence des motifs éthylène et propylène est statistique,
en tant qu'huile de base pour la formulation de lubrifiants pour les machines frigorifiques qui contiennent du dioxyde de carbone en tant qu'agent réfrigérant.

2. Utilisation selon la revendication 1, dans laquelle la somme (m+n) va de 3 à 9.

3. Utilisation selon la revendication 1 et/ou 2, dans laquelle R² représente un groupe alkyle contenant 1 à 12 atomes de carbone.

4. Utilisation selon l'une ou plusieurs des revendications 1 à 3, dans laquelle m est égal à zéro.

5. Utilisation selon l'une ou plusieurs des revendications 1 à 4, dans laquelle k est égal à zéro.

6. Utilisation selon l'une ou plusieurs des revendications 1 à 5, dans laquelle R² représente un groupe alkyle en C₁ à C₁₈ ou aryle en C₆ à C₁₈.

7. Procédé de fonctionnement d'une machine frigorifique avec du dioxyde de carbone en tant que milieu réfrigérant, dans lequel on met en oeuvre un composé tel que défini dans l'une ou plusieurs des revendications 1 à 6 en tant qu'huile de base pour lubrifiant.
